# EUROPEAN PATENT APPLICATION

(11) **EP 2 784 672 A1**
(43) Date of publication of application: **01.10.2014**
(21) Application number: 12852198.6
(22) Date of filing: 05.11.2012
(51) Int. Cl.: G06F 9/46

(54) **METHOD FOR PROCESSING INFORMATION, BROWSING DEVICE AND STORAGE MEDIUM**

(30) Priority: 25.11.2011 CN 201110382448
(71) Applicant: Tencent Technology (Shenzhen) Company Limited, Shenzhen, Guangdong 518044 (CN)
(72) Inventor: GAO, Wenjun, Shenzhen Guangdong 518044 (CN); HE, Ming, Shenzhen Guangdong 518044 (CN); CHEN, Lei, Shenzhen Guangdong 518044 (CN); SHEN, Can, Shenzhen Guangdong 518044 (CN); ZHEN, Shi, Shenzhen Guangdong 518044 (CN)
(74) Representative: Reichert & Lindner Partnerschaft Patentanwälte
(86) International application number: PCT/CN2012/084065
(87) International publication number: WO 2013/075582

(57) **Abstract**

The present invention discloses a method for processing information, a storage medium and a browser. The method includes: a browser receiving non-processed information, and calling a corresponding browser plugin according to a type of the non-processed information; and the browser calling a corresponding third-party software through the browser plug-in, and processing the non-processed information using the third-party software. The browser of the present invention calls a third-party software via the browser plugin, and submits complex non-webpage information cannot be processed by the browser to the third-party software for processing, and this method expands the scope of the information can be processed by the browser, and improves the information processing capability of the browser. Furthermore, the third-party software and the browser are independent from each other, a size of an installation package of the browser can be reduced, and the health degree of the third-party software can also be improved. Additionally, the interaction of the browser plugin and the third-party software improves the mutual viscous of the third-party software and the browser, as a result, the third-party software get more exposure under the support of the browser.

## Description

### TECHNICAL FIELD

The present invention relates to computer technology, and more particularly to a method for processing information, a storage medium and a browser.

### BACKGROUND

With the development of diversified functionalities, cellular phones are not only used as mobile phones. People can obtain a variety of information by browsing webpage with a browser in the mobile phones. The browser needs to process information to achieve corresponding functions. For example, the browser processes the information to load webpages.

When processing information, the existing browser judges whether the received information is webpage information; if yes, the browser processes the received information; if no, the browser could call embedded browser plugins to process the received information indirectly.

In the process of inventing the present invention, the inventors have found that the known art exists at least the following problems.

The browser in the known art needs to call the browser plugins to process the information if the information is non-webpage information. If the browser plugins cannot process the non-webpage information, the browser also cannot process the non-webpage information. As a result, the scope of the information that can be processed by the browser is limited, this leads to the browser is also limited a bit when processing information, the ability of processing information is not so high, and this affects the normal use of the users.

### SUMMARY OF THE INVENTION

To expand the scope of information that the browser processes, and improve the capacity of the browser for processing information, the present invention provides a method for processing information, a storage medium and a browser. The technical solutions are described as follows.

In one aspect, a method for processing information is provided. The method includes:

a browser receiving non-processed information, and calling a corresponding browser plugin according to a type of the non-processed information;

calling a corresponding third-party software through the browser plugin, and processing the non-processed information using the third-party software.

Prior to the step of calling a corresponding browser plugin according to a type of the non-processed information, the method further includes: the browser judges whether the browser is capable of processing the non-processed information. If the browser is capable of processing the non-processed information, the browser processes the non-processed information.

If the browser is not capable of processing the non-processed information, the browser performs the step of calling the corresponding browser plugin according to the type of the non-processed information.

The step that the browser judges whether the browser is capable of processing the non-processed information includes: the browser judges whether the non-processed information is webpage information; if yes, the browser judges that it is capable of processing the non-processed information.

Prior to the step of the browser plugin calling the corresponding third-party software, the method further includes the steps of: the browser plugin judges whether the browser plugin is capable processing the non-processed information; if yes, the browser processes the non-processed information using the browser plugin; if no, the browser performs the step of calling the corresponding third-party software via the browser plugin.

The third-party software is embedded in the browser.

The third-party software and the browser are independent from each other.

The browser is a browser in a computer or a browser in a mobile terminal.

In another aspect, a browser is also provided. The browser includes:

a receiving module, configured for receiving non-processed information;

a first calling module, configured for calling a corresponding browser plugin according to a type of the non-processed information received by the receiving module;

a second calling module, configured for calling a corresponding third-party software through the browser plugin called by the first calling module, and processing the non-processed information using the third-party software.

The browser further includes:

a first judging module, configured for judging whether the browser is capable of processing the non-processed information received by the receiving module, before the first calling module calls the corresponding the browser plugin according to the type of the non-processed information; and

a first processing module, configured for processing the non-processed information, in the condition that the first judging module judges that the browser is capable of processing the non-processed information received by the receiving module.

Accordingly, the first calling module is further configured for calling the corresponding browser plugin according to the type of the non-processed information, in the condition that the first judging module judges that the browser is not capable of processing the non-processed information received by the receiving module.

The first judging module is configured for judging whether the type of the non-processed information is webpage information; if yes the first judging module judges that the browser is capable of processing the non-processed information.

The browser may further include:
a second judging module, configured for judging whether the non-processed information can be processed by the browser plugin, before calling the correspond third-party software through the browser plugin; and
a second processing module, configured for processing the non-processed information using the browser plugin, in the condition that the second judging module judges that the non-processed information can be processed by the browser plug-in.

Accordingly, the second calling module is further configured for calling the corresponding third-party software through the browser plugin, in the condition that the second judging module judges that the non-processed information cannot be processed by the browser plugin.

The browser is a browser in a computer or a browser in a mobile terminal.

In another aspect, a computer readable storage medium storing one or more programs is also provided. The one or more programs comprising instructions, which can be executed by an electronic device, cause the electronic device to perform a method including:

a browser receiving non-processed information, and calling a corresponding browser plugin according to a type of the non-processed information;

calling a corresponding third-party software through the browser plugin, and processing the non-processed information using the third-party software.

The technical solutions provided by the embodiments of the present invention have the following advantages.

The browser calls a third-party software through a browser plugin, and submits complex non-webpage information cannot be processed by the browser to the third-party software for processing, and this method expands the scope of the information can be processed by the browser, and improves the information processing capability of the browser. Furthermore, the third-party software and the browser are independent from each other, a size of an installation package of the browser can be reduced, and the health degree of the third-party software can also be improved. Additionally, the interaction of the browser plugin and the third-party software improves the mutual viscous of the third-party software and the browser, as a result, the third-party software get more exposure under the support of the browser.

### DESCRIPTION OF THE DRAWINGS

In order to describe technical solutions of embodiments of the present inventions more clearly, the accompanying drawings required for describing the embodiments are briefly introduced hereinafter. It is apparent that the accompanying drawings are only used for illustrating some of the embodiments of the present invention, and for those ordinarily skilled in the art, further drawings can be realized without additional inventive efforts.
FIG. 1 is a flowchart illustrating a method for processing information provided by embodiment 1 of the present invention;
FIG. 2 is a flowchart illustrating a method for processing information provided by embodiment 2 of the present invention;
FIG. 3 is a schematic diagram illustrating an interface of a home page of a browser provided in embodiment 3 of the present invention;
FIG. 4 is a flowchart illustrating a method for processing information provided by embodiment 3 of the present invention;
FIG. 5 is a block diagram of a browser provided by embodiment 4 of the present invention;
FIG. 6 is block diagram of another browser provided by embodiment 4 of the present invention;
FIG. 7 is block diagram of yet another browser provided by embodiment 4 of the present invention.

### DETAILED DESCRIPTION OF PREFERRED EMBODIMENTS

To describe the object, the technical solutions and the advantages of the present invention more clearly, embodiments of the present invention are described in detail accompanying with drawings as follows.

### Embodiment 1

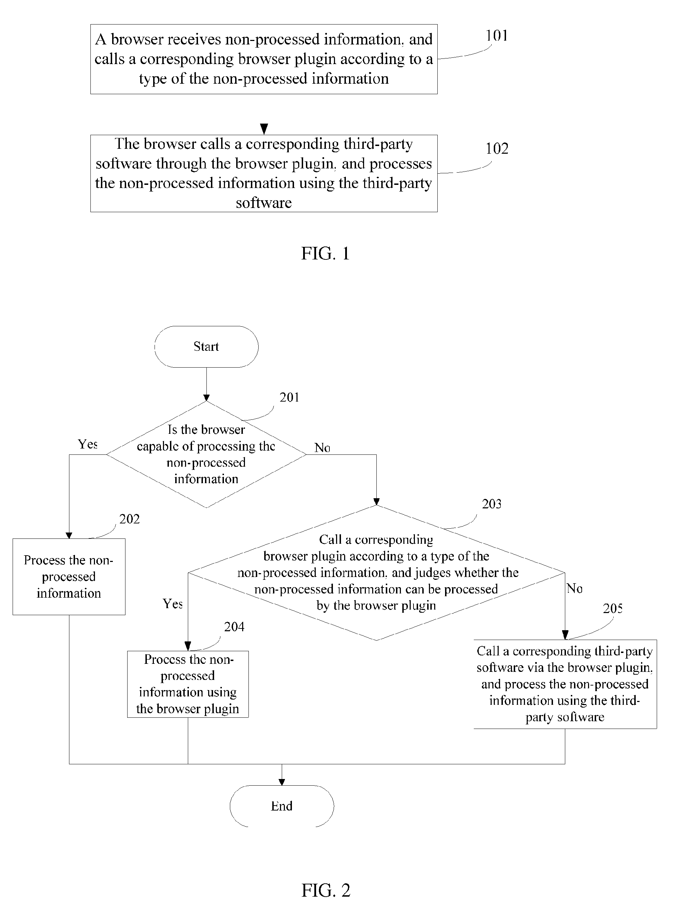

Referring to FIG. 1, the present embodiment provides a method for processing information. The method includes the following steps:
101: a browser receives non-processed information, and calls a corresponding browser plugin according to a type of the non-processed information;
102: the browser calls a corresponding third-party software through the browser plugin, and processes the non-processed information using the third-party software.

Before calling the corresponding browser plugin according to the type of the non-processed information, the method further includes:

The browser judges whether the browser is capable of processing the non-processed information;

If the browser is capable of processing the non-processed information, the browser processes the non-processed information;

If the browser is not capable of processing the non-processed information, performs the step of calling the corresponding browser plugin according to the type of the non-processed information.

Specifically, the step that the browser judges whether the browser is capable of processing the non-processed information includes the following steps:

The browser judges whether the type of the non-processed information is webpage information; if the type of the non-processed information is the webpage information, the browser judges that the browser is capable of processing the non-processed information.

Furthermore, before calling a corresponding third-party software through the browser plugin, the method further includes the following steps:

The browser plugin judges whether the browser plugin is capable of processing the non-processed information;

If the browser plugin is capable of processing the non-processed information, the non-processed information is processed by the browsing device plugin;

If the browser plugin is not capable of processing the non-processed information, the step of calling the corresponding third-party software through the browser plug-in is performed.

In addition, the third-party software is embedded in the browser.

Preferably, the third-party software is independent from the browser.

Specifically, the browser may be a browser of a computer or a mobile terminal. The computer includes, but not limited to, a desktop computer or a portable computer. The mobile terminal includes, but not limited to, a mobile phone, a tablet computer, or a personal digital assistant (PDA).

According to the method of the present embodiment, the browser calls a third-party software through a browser plug-in, and submits complex non-webpage information cannot be processed by the browser to the third-party software for processing, and this method expands the scope of the information can be processed by the browser, and improves the information processing capability of the browser. Furthermore, the third-party software and the browser are independent from each other, a size of an installation package of the browser can be reduced, and the health degree of the third-party software can also be improved. Additionally, the interaction of the browser plugin and the third-party software improves the mutual viscous of the third-party software and the browser, as a result, the third-party software get more exposure under the support of the browser.

For describing the method provided by the present embodiment in more detail, hereinafter, combining with the above description, the method provided by the present embodiment is described in detail according to embodiment 2 and embodiment 3 as follows:

### Embodiment 2

Referring to FIG. 2, the present embodiment provides a method for processing information. The flow of the method includes following steps:

201: a browser judges whether the browser is capable of processing received non-processed information. If the browser is capable of processing the non-processed information, a step 202 is executed. Otherwise, a step 203 is executed.

The step 201 is optional. The browser is a kind of software that is configured for displaying documents in a web server or a file system, and performing interaction between users and the documents. Concretely, the browser interacts with the web server and obtains webpage via hypertext transfer protocol. Therefore, the browser processes webpage information interacting with the web server via network transfer protocols.

When the browser establishes a connection to the server, the browser sends an independent data request of link to the server in the background automatically, and receives an encrypted packet with a data type sent from the server. Information in the encrypted packet refers to the non-processed information. When the browser processes the non-processed information, the browser could judges whether the browser is capable of processing the non-processed information at first. A specific way of judging whether the browser is capable of processing the non-processed information includes the following steps. The browser decrypts the data type of the received packet, and then judges whether the non-processed information is webpage information. If the non-processed information is webpage information, the browser is capable of processing the non-processed information, a step 202 is executed. If the non-processed information is non-webpage information, a step 203 is executed. In addition, except judging whether the browser is capable of processing the non-processed information by judging whether the non-processed information is webpage information, other methods can also be employed, and the method are not limited in the present embodiment.

When judging the non-processed information is webpage information, the webpage information may be information that conforms to webpage format. As the browser processes webpage information interacting with the web server via network transfer protocols, thus the existing technologies for judging whether the non-processed information is webpage information is very mature, and is not limited in the present embodiment.

202: the browser processes the non-processed information, and the process ends.

Specifically, because the browser can process the webpage information interacting with the web server via the network transfer protocols, therefore, after the browser judges that the non-processed information is webpage information, the browser can process the non-processed information directly. The existing technologies that the browser used to process the webpage information are very mature, and the detail process that the browser how to process the non-process information is not described here for a purpose of brief description in the present embodiment.

203: the browser calls a corresponding browser plugin according to a type of the non-processed information, and the browser plugin judges whether the browser plugin is capable of processing the non-processed information. If the browser plugin is capable of processing the non-processed information, a step 204 is executed; otherwise, a step 205 is executed.

Additionally, the step of the browser plugin judging whether the browser plugin is capable of processing the non-processed information is optional. The browser plugin is a widget program provided by a third-party software according to certain application programming interface specification, and is embedded in the browser. The function of the browser plugin is to process non-webpage information that cannot be processed by the browser. The browser provides a loading way for the browser plugin, so that the browser plugin can be loaded into the applications and the network transfer protocols, and exchange data with the browser. The browser plugin may be started when the browser starts, or started by the browser when the browser calls the browser plugin, or started and closed by the users at any time. Ways to start the browser plugin are not limited in the present embodiment.

After the browser decrypts the encrypted packet, which is sent by the server and received by the browser, and ascertains the packet type, the browser calls the corresponding browser plugin according to the packet type. If more than one browser plugins embedded in the browser are capable of processing the non-processed information of the type, the browser may call a default browser plugin for processing the non-processed information of the type. However, the browser plugin is a simplified version of the third-party software, so the browser plugin is only capable of processing simple non-webpage information. For complex non-webpage information, the method of the present embodiment supports a manner that the browser plugin calls the third-party software to processes the non-processed information. In that case, the browser plugin has to prejudge whether the browser plugin is capable of processing the non-processed information. If the browser plugin is capable of processing the non-processed information, a step 204 is executed. If the browser plugin is not capable of processing the non-processed information, a step 205 is executed.

In a process of the browser plugin judging whether the browser plugin is capable of processing the non-processed information, for example, the browser plugin judges according to a complexity of the non-processed information. If the complexity is within the scope that the browser plugin can process, the browser plugin judges that the browser plugin is capable of processing the non-processed information. If the complexity is beyond the scope that the browser plugin can process, the browser plugin judges that the browser plugin is not capable of processing the non-processed information. In addition, except judging whether the browser plugin is capable of processing the non-processed information according to the complexity of the non-processed information, there may be other ways to judge whether the browser plugin is capable of processing the non-processed information, and the ways are not limited in the present embodiment.

204: the browser plugin processes the non-processed information, and the process ends.

In this step, when the browser plugin judges that the browser plugin is capable of processing the non-processed information, the browser plugin processes the information via the network transfer protocol with the server. As the way of processing simple non-webpage information by browser plugins is very mature in the known art, thus the detail process is not described in the present embodiment for the purpose of brief description.

205: the browser calls a corresponding third-party software via the browser plugin, and processes the non-processed information with the third-party software, and the process ends.

Specifically, the third-party software provides the browser plugin to the browser. The third-party software and the browser plugin switch with each other using universal interfaces, and processes non-webpage information. Both of the third-party software and the browser plugin have capability to process the non-webpage information. The difference is that the browser plugin is embedded in the browser. A size of an installation package of the browser plugin is limited, and the database of the browser plugin is a brief version. Similar to the browser plugin, the third-party software also can be embedded in the browser. However, in order to reduce the size of the installation package of the browser, the third-party software and the browser can also be individually installed according to the method of the present embodiment. Then, the third-party software can be called by the browser plugin when there is information needs to be processed. Compared to the browser plugin, the database of the third-party software is more complete, and the capability for processing information is stronger. Calling the corresponding third-party software via the browser plugin, and processing the non-processed information with the third-party software is very mature in the known art, the detail process is not described in the present embodiment for the purpose of a brief description.

The browser may be a browser of a computer or a mobile terminal. The computer includes, but not limited to, a desktop computer or a portable computer; the mobile terminal includes, but not limited to, a mobile phone, a tablet computer, or a PDA.

In the method of the present embodiment, the browser calls a third-party software via a browser plugin, and submits complex non-webpage information cannot be processed by the browser to the third-party software for processing, and this method expands the scope of the information can be processed by the browser, and improves the information processing capability of the browser. Furthermore, the third-party software and the browser are independent from each other, a size of an installation package of the browser can be reduced, and the health degree of the third-party software can also be improved. Additionally, the interaction of the browser plugin and the third-party software improves the mutual viscous of the third-party software and the browser, as a result, the third-party software get more exposure under the support of the browser.

### Embodiment 3

The present embodiment provides a method for processing information. For describing the method provided by the present embodiment more intuitively, the method provided by the present embodiment is described taking the browser is a really simple syndication (RSS) plugin and the third-party software is an RSS software as an example.

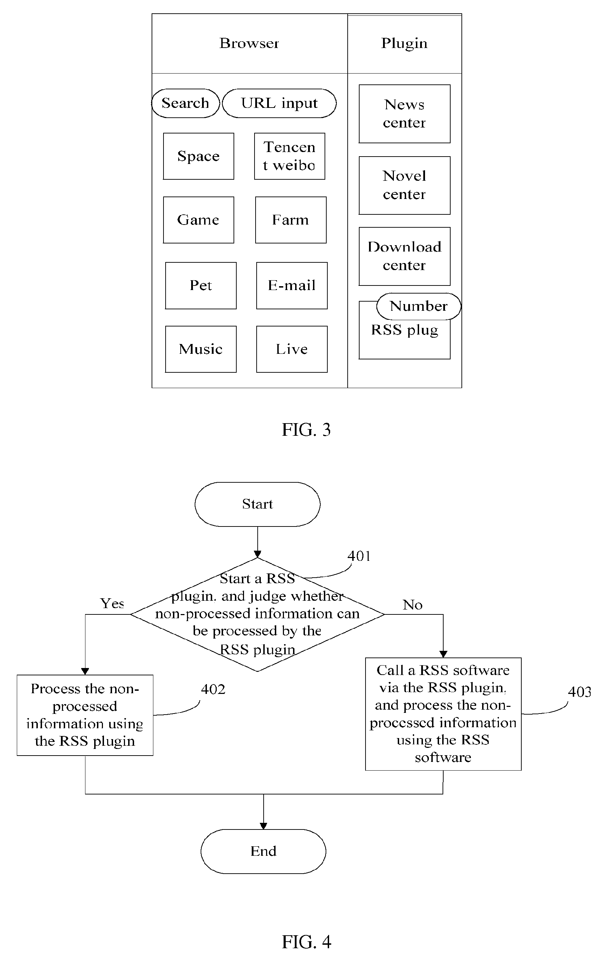

Specifically, after the browser launching the RSS plugin, the RSS plugin is displayed on a sidebar of the browser, as shown in FIG. 3, which is a is a schematic diagram illustrating an interface of a home page of the browser. When the browser is in use, the RSS software automatically checks messages that can be optionally processed by the user. The RSS plugin query the RSS software whether there are unread messages, prompts tips to the user for the number of the unread messages, and displays a prompt box including the number of the unread messages at a top of the RSS plugin shown in FIG. 3. The user may click the RSS plugin to launch the browser for processing and reading the unread messages. In the condition that the unread information is non-webpage information, the browser judges that the non-processed information is non-webpage information; the browser processes the non-processed information via calling the RSS plugin. Referring to FIG. 4, the method provided by the present embodiment includes following steps:

401, after the browser launching the RSS plugin, the RSS plugin judges whether the RSS plugin is capable of processing the non-processed information. If the RSS plugin is capable of processing the non-processed information, a step 402 is executed; otherwise, a step 403 is executed.

The RSS plugin is a widget program provided by a RSS software according to certain application programming interface specification, and is embedded in the browser. The function of the RSS plugin is to process non-webpage information that cannot be processed by the browser. The browser provides a loading way for the RSS plugin, so that the RSS plugin can be loaded into the applications and the network transfer protocols, and exchange data with the browser. The RSS plugin can use the data shared by the browser. The RSS plug-in can use the data shared by the browser.

The RSS plugin may be started when the browser starts, or started by the browser when the browser calls the browser plugin, or started and closed by the users at any time. Ways to start the RSS plugin are not limited in the present embodiment.

After the browser decrypts the encrypted packet, which is sent by the server and received by the browser, and ascertains the packet type, the browser calls the corresponding browser plugin, that is the RSS plugin, according to the packet type. As the RSS plugin is a simplified version of the RSS software, thus the RSS plugin is only capable of processing simple non-webpage information. For complex non-webpage information, the RSS plugin needs to call the RSS software to process the non-processed information. In that case, the RSS plugin has to prejudge whether the RSS plugin is capable of processing the non-processed information. If the RSS plugin is capable of processing the non-processed information, a step 402 is executed. If the RSS plugin is not capable of processing the non-processed information, a step 403 is executed.

In a process of the RSS plugin judging whether the browser plugin is capable of processing the non-processed information, for example, the RSS plugin judges according to a complexity of the non-processed information. If the complexity is within the scope that the RSS plugin can process, the RSS plugin judges that the RSS plugin is capable of processing the non-processed information. If the complexity is beyond the scope that the RSS plugin can process, the RSS plugin judges that the RSS plugin is not capable of processing the non-processed information. In addition, except judging whether the RSS plugin is capable of processing the non-processed information according to the complexity of the non-processed information, there may be other ways to judge whether the browser plugin is capable of processing the non-processed information, and the ways are not limited in the present embodiment.

402: the RSS plugin processes the non-processed information, and the process ends.

In this step, when the RSS plugin judges that the RSS plugin is capable of processing the non-processed information, the RSS plugin processes the information via the network transfer protocol with the server. As the way of processing simple non-webpage information by RSS plugins is very mature in the known art, thus the detail process is not described in the present embodiment for the purpose of brief description.

Step 403: the RSS plugin calls the RSS software, the RSS software processes the non-processed information, and the process ends.

The RSS software provides an easy way to share some contents online. RSS feeds provide by websites is helpful for the user to obtain latest updates in a quick manner. The RSS software provides the RSS plugin to the browser. The RSS software and the RSS plugin switch with each other using universal interfaces, and processes non-webpage information. Both of the RSS software and the RSS plugin have capability to process the non-webpage information. The difference is that the RSS plugin is embedded in the browser. A size of an installation package of the RSS plugin is limited, and the database of the RSS plugin is a brief version. Similar to the RSS plugin, the RSS software also can be embedded in the browser. However, in order to reduce the size of the installation package of the browser, the RSS software and the browser can also be individually installed according to the method of the present embodiment. Then, the RSS software can be called by the RSS plugin when there is information needs to be processed. Compared to the RSS plugin, the database of the RSS software is more complete, and the capability for processing information is stronger. Thus, the messages to be read can be shown to the user using modules already exists in the RSS software when processing the non-processed information using the RSS software. Reading non-process information such as unread messages using an RSS software is very mature in the known art, the detail process is not described in the present embodiment for the purpose of a brief description.

Furthermore, after the third-party software processing the non-processed information, the method provided by the present embodiment further includes a step of returning to a home page of the browser. The way of returning to the home page of the browser is not limited in the present embodiment. In practical applications, the third-party software may provide an entrance for returning to the home page after the third-party software processes the non-processed information, thereby returning to the home page of the browser using the entrance.

The browser may be a browser of a computer or a mobile terminal. The computer includes, but not limited to, a desktop computer or a portable computer; the mobile terminal includes, but not limited to, a mobile phone, a tablet computer, or a PDA.

In the method of the present embodiment, the browser calls a RSS software via a RSS plugin, and submits complex non-webpage information cannot be processed by the browser to the RSS software for processing, and this method expands the scope of the information can be processed by the browser, and improves the information processing capability of the browser. Furthermore, the RSS software and the browser are independent from each other, a size of an installation package of the browser can be reduced, and the health degree of the RSS software can also be improved. Additionally, the interaction of the RSS plugin and the RSS software improves the mutual viscous of the RSS software and the browser, as a result, the RSS software get more exposure under the support of the browser.

The ordinary skill in the art can understand that all or part of the steps in the aforementioned method embodiments can be realized by related hardware instructed by programs. The programs can be stored in a computer readable storage medium. The programs execute the aforementioned method embodiments. The storage medium may be a disk, an optical disk, a ROM, RAM, etc.

### Embodiment 4

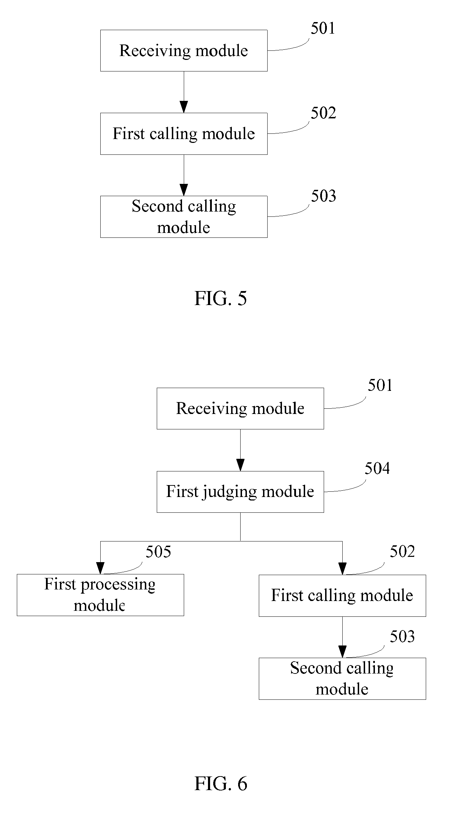

Referring to FIG. 5, the present embodiment provides a browser, the browser is configured for executing the methods provided by the aforementioned embodiments 1-3 for processing information. The browser includes: a receiving module 501, a first calling module 502, and a second calling module 503.

The receiving module 501 is configured for receiving non-processed information.

The first calling module 502 is configured for calling a corresponding browser plugin according to a type of the non-processed information received by the receiving module 501;

The second calling module 503 is configured for calling a corresponding third-party software via the browser plugin called by the first calling module 502, and process the non-processed information with the third-party software.

Referring to FIG. 6, the browser further includes a first judging module 504 and a first processing module 505.

The first judging module 504 is configured for judging whether the browser is capable of processing the non-processed information received by the receiving module 501, before the first calling module 502 calls the corresponding the browser plug-in according to the type of the non-processed information;

The first processing module 505 is configured for processing the non-processed information, in the condition that the first judging module 504 judges that the browser is capable of processing the non-processed information received by the receiving module 501;

The first calling module 502 is further configured for calling the corresponding browser plugin according to the type of the non-processed information, in the condition that the first judging module 504 judges that the browser is not capable of processing the non-processed information received by the receiving module 501;

The first judging module 504 is practically configured for judging whether the type of the non-processed information is webpage information. If the type of the non-processed information is webpage information, the first judging module 504 judges that the browser is capable of processing the non-processed information.

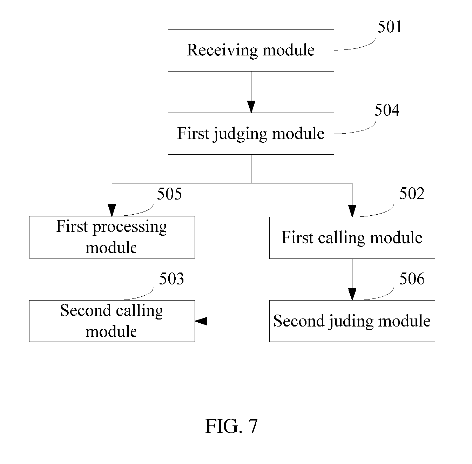

Referring to FIG. 7, the browser further includes a second judging module 506.

The second judging module 506 is configured for judging whether the non-processed information can be processed by the browser plugin, before calling the correspond third-party software via the browser plugin;

The second calling module 503 is further configured for processing the non-processed information via the browser plugin, in the condition that the second judging module 506 judges that the non-processed information can be processed by the browser plugin.

The second calling module 503 is further configured for calling the corresponding third-party software via the browser plugin, in the condition that the second judging module 506 judges that the non-processed information cannot be processed by the browser plugin.

The browser may be a browser of a computer or a mobile terminal. The computer includes, but not limited to, a desktop computer or a portable computer; the mobile terminal includes, but not limited to, a mobile phone, a tablet computer, or a PDA.

According to the browser provided by the present embodiment, the browser calls a third-party software via a browser plugin, and submits complex non-webpage information cannot be processed by the browser to the third-party software for processing, and this method expands the scope of the information can be processed by the browser, and improves the information processing capability of the browser. Furthermore, the third-party software and the browser are independent from each other, a size of an installation package of the browser can be reduced, and the health degree of the third-party software can also be improved. Additionally, the interaction of the browser plugin and the third-party software improves the mutual viscous of the third-party software and the browser, as a result, the third-party software get more exposure under the support of the browser.

It should be noted that the process of the browser provided by the aforementioned embodiment processing the non-processed information is described via the aforementioned division of the functional modules as an example. In practical applications, the above process can be realized by different functional modules according to demand. In other words, internal structure of the browser is divided into several functional modules for realizing all or part of the aforementioned functions. In addition, the browser provided by the aforementioned embodiment and the method embodiments for processing information belongs to the same idea. The implementation process of the browser and the method refers to the method embodiment, and is not repeated here.

The serial numbers of the aforementioned embodiments of the present invention are configured for facilitating description, and do not represent pros and cons of the embodiments.

All or part of the steps in the embodiments of the present invention can be realized by programs. The programs can be stored in a readable storage medium, such as a disk or an optical disk.

The above descriptions are only preferred embodiments of the present invention, and are not intended to limit the present invention. Any modifications, equivalent replacements, and improvements to the embodiments that are within the scope of the present invention, should be included in the scope of the present invention.

## Claims

1. A method for processing information, **characterized in that** the method comprises:
a browser receiving non-processed information, and calling a corresponding browser plugin according to a type of the non-processed information;
the browser calling a corresponding third-party software through the browser plugin, and processing the non-processed information using the third-party software.

2. The method according to claim 1, **characterized in that**, before the step of calling a corresponding browser plugin according to a type of the non-processed information, the method further comprises:
the browser judging whether the browser is capable of processing the non-processed information;
if the browser is capable of processing the non-processed information, the browser processing the non-processed information;
if the browser is not capable of processing the non-processed information, the step of calling a corresponding browser plugin according to a type of the non-processed information being executed.

3. The method according to claim 2, **characterized in that** the step of the browser judging whether the browser is capable of processing the non-processed information comprises:
the browser judging whether the type of the non-processed information is webpage information;
if the type of the non-processed information is webpage information, the browser judging that the browser is capable of processing the non-processed information.

4. The method according to claim 1, **characterized in that**, before the step of the browser calling a corresponding third-party software through the browser plugin, the method further comprises:
the browser plugin judging whether the browser plugin is capable of processing the non-processed information;
if the browser plugin is capable of processing the non-processed information, the browser processing the non-processed information using the browser plugin;
if the browser plugin is not capable of processing the non-processed information, the step of calling a corresponding third-party software through the browser plugin being executed.

5. The method according to claim 1, **characterized in that** the third-party software is embedded in the browser.

6. The method according to claim 1, **characterized in that** the third-party software and the browser are independent from each other.

7. The method according to any one of claims 1-6, **characterized in that** the browser is a browser of a computer or a mobile terminal.

8. A browser, **characterized in that** the browser comprises:
a receiving module, configured for receiving non-processed information;
a first calling module, configured for calling a corresponding browser plugin according to a type of the non-processed information;
a second calling module, configured for calling a corresponding third-party software through the browser plugin, and processing the non-processed information using the third-party software.

9. The browser according to claim 8, **characterized in that** the browser further comprises:
a first judging module, configured for judging whether the browser is capable of processing the non-processed information received by the receiving module, before the first calling module calls a corresponding browser plugin according to the type of the non-processed information; and
a first processing module, configured for processing the non-processed information, in the condition that the first judging module judges that the browser is capable of processing the non-processed information received by the receiving module;
the first calling module being further configured for calling the corresponding browser plugin according to the type of the non-processed information, in the condition that the first judging module judges that the browser is not capable of processing the non-processed information received by the receiving module.

10. The browser according to claim 9, **characterized in that** the first judging module is configured for judging whether the type of the non-processed information is webpage information;
if the type of the non-processed information is webpage information, the first judging module judges that browser is capable of processing the non-processed information.

11. The browser according to claim 8, **characterized in that** the browser further comprises:
a second judging module, configured for judging whether the browser plugin is capable of processing the non-processed information, before calling a corresponding third-party software through the browser plugin;
a second processing module, configured for processing the non-processed information using the browser plugin, in the condition that the second judging module judges that the browser plugin is capable of processing the non-processed information; and
a second calling module, configured for calling a corresponding third-party software through the browser plugin, in the condition that the second judging module judges that the browser plugin is not capable of processing the non-processed information.

12. The browser according to any one of claims 8-11, **characterized in that** the browser is a browser of a computer or a mobile terminal.

13. A computer readable storage medium storing one or more programs, the one or more programs comprising instructions, which can be executed by an electronic device, cause the electronic device to perform a method comprising:
a browser receiving non-processed information, and calling a corresponding browser plugin according to a type of the non-processed information;
the browser calling a corresponding third-party software through the browser plugin, and processing the non-processed information using the third-party software.
